# FASCICULE DE BREVET EUROPEEN

(11) **EP 1 285 573 B1**
(45) Date de publication et mention de la délivrance du brevet: **03.05.2006**
(21) Numéro de dépôt: 02291963.3
(22) Date de dépôt: 05.08.2002
(51) Int. Cl.: A01G 9/10, A01G 9/08

(54) **Dispositif pour le repiquage de plants**
Umpflanzungsvorrichtung
Device for pricking out plants

(30) Priorité: 06.08.2001 FR 0110506
(43) Date de publication de la demande: 26.02.2003
(73) Titulaire: Robin, Pepinieres, 05500 Saint Laurent du Cros (FR)
(72) Inventeur: Robin, Maximin, 05500 Saint Laurent du Cros (FR)
(74) Mandataire: Casalonga, Axel

(56) Documents cités:
- EP-A- 0 551 232
- DE-A- 2 709 692

## Description

La présente invention concerne un dispositif pour le repiquage de jeunes plants, en général à racines nues, dans des bacs de culture, en particulier des bacs alvéolés ou dans des godets individuels rangés dans des bacs ou des caisses, comme connu par le document EP 0 551 232.

Actuellement, pour le repiquage de plants dans un bac en matière plastique expansée présentant une multiplicité d'alvéoles, l'opérateur prend d'une main un jeune plant à racines nues et engage ses racines dans une alvéole et, de l'autre main, remplit cette alvéole de terre et la tasse. Il recommence ces opérations successivement de façon à effectuer des repiquages dans toutes les alvéoles du bac. Cette manière de procéder prend énormément de temps. De plus, comme les alvéoles sont en général proches les unes des autres, lorsque l'opérateur remplit une alvéole avec de la terre, de la terre pénètre dans les alvéoles voisines non encore utilisées de telle sorte que lorsque l'opérateur effectue une opération de repiquage dans ces alvéoles voisines, les racines des plants peuvent se trouver repliées vers le haut, ce qui est préjudiciable à leur croissance et occasionne des déformations racinaires appelées "crosses", "cors de chasse" ou "S".

Une autre méthode consiste à repiquer les jeunes plants à racines nues dans des bacs dont les alvéoles ont été au préalable remplies de terre, en réalisant avec une cheville un trou au centre des alvéoles et en glissant ensuite les racines des jeunes plants dans ces trous. Mais cette méthode occasionne également les mêmes déformations racinaires que celles précédemment évoquées.

Une autre manière de procéder consiste à effectuer manuellement des repiquages de jeunes plants dans des godets individuels, qui sont ensuite disposés les uns à coté des autres dans des bacs ou caisses. Cette manière de procéder nécessite un grand nombre d'opérations successives et prend aussi énormément de temps.

La présente invention a pour but de proposer un dispositif de repiquage de jeunes plants, en particulier à racines nues, permettant de faciliter le travail d'un opérateur, d'augmenter le rendement et de supprimer ou pour le moins limiter les risques de déformations racinaires liées au repiquage.

Le dispositif pour le repiquage de plants dans un bac de culture, comprend, selon l'invention, un support présentant au moins une barre susceptible d'être disposée au-dessus et/ou à distance de la face supérieure dudit bac et une multiplicité de pinces portées par ladite barre et comprenant chacune deux mâchoires dont au moins une peut être écartée de l'autre à l'encontre d'un ressort et présente une partie de préhension, lesdites mâchoires délimitant entre elles un passage de prise s'étendant latéralement à ladite barre, de telle sorte qu'après avoir écarté lesdites mâchoires, le collet ou la tige d'un plant puisse être introduit entre ces mâchoires dans ledit passage de prise, par déplacement latéral, et qu'après relâchement desdites mâchoires, ledit plant soit maintenu sous l'effet dudit ressort dans une position telle que ses racines soient disposées dans ledit bac.

Selon l'invention, ladite pince comprend de préférence une première mâchoire présentant deux branches et une seconde mâchoire comprenant une branche située en face de l'espace séparant les branches de la première mâchoire.

Selon l'invention, au moins l'une desdites mâchoires de ladite pince comprend de préférence au moins une branche constituée au moins en partie par un ressort.

Selon l'invention, au moins l'une desdites mâchoires comprend de préférence une encoche de positionnement du plant.

Selon l'invention, ledit bac peut avantageusement comprendre une multiplicité d'alvéoles, ledites pinces étant disposées respectivement de telle sorte que leurs passages de prise s'étendent sensiblement au milieu desdites alvéoles.

Selon l'invention, ledit support peut avantageusement comprendre une multiplicité de barres parallèles portant des pinces et un cadre portant lesdites barres parallèles.

Selon l'invention, ledit support est de préférence amovible et comprend de préférence des moyens de positionnement et/ou de maintien adaptés pour coopérer avec ledit bac.

Selon l'invention, ledit support comprend de préférence des parties latérales de calage s'étendant latéralement audit bac.

Selon l'invention, ledit support comprend de préférence au moins un ressort venant en appui contre une face latérale dudit bac.

Selon l'invention, ledit bac peut avantgeusement être installé sur une table vibrante.

La présente invention sera mieux comprise à l'étude d'un dispositif de repiquage de plants dans un bac de culture alvéolé, décrit à titre d'exemple non limitatif et illustré par le dessin sur lequel :

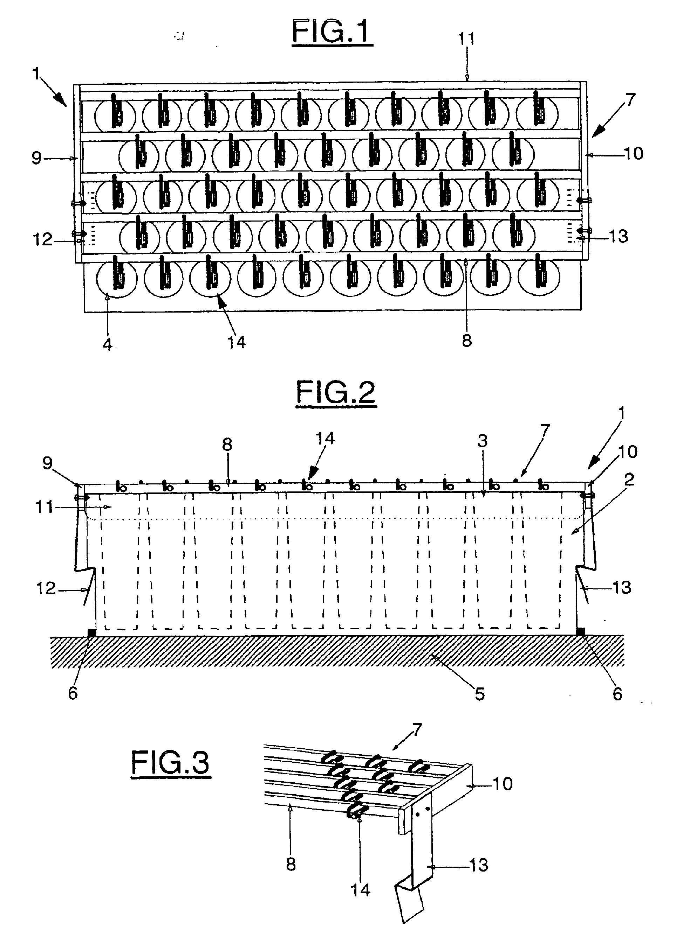

- la figure 1 représente une vue de dessus d'un dispositif de repiquage de plants selon la présente invention ;
- la figure 2 représente une vue de côté du dispositif de repiquage la figure 1 ;
- la figure 3 représente une vue partielle en perspective d'une partie du dispositif de repiquage précité ;

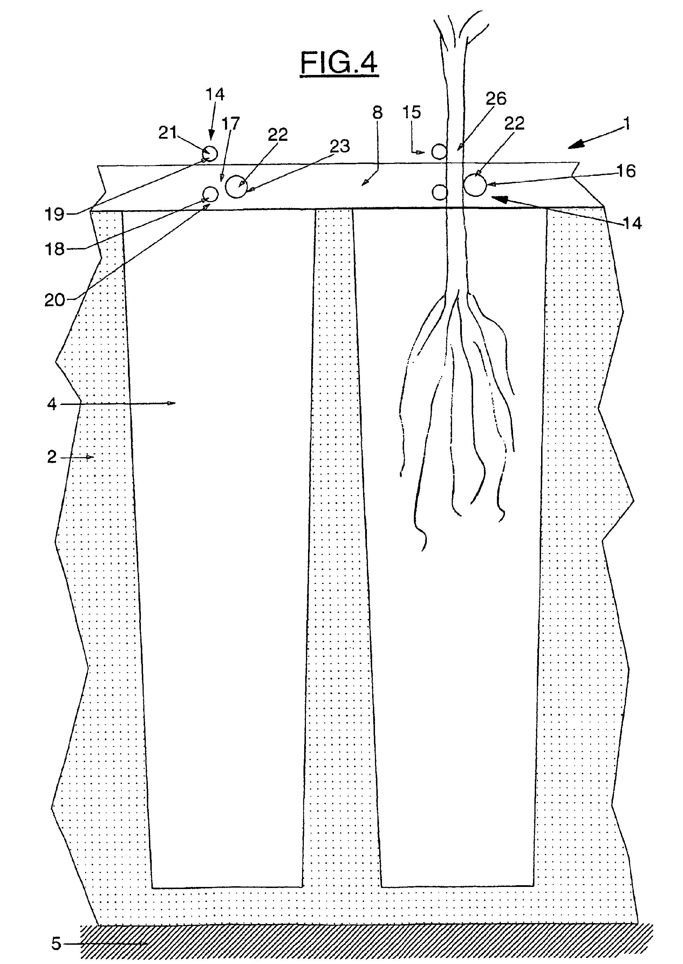

- la figure 4 représente une vue agrandie en coupe d'une partie du dispositif de repiquage précité ;

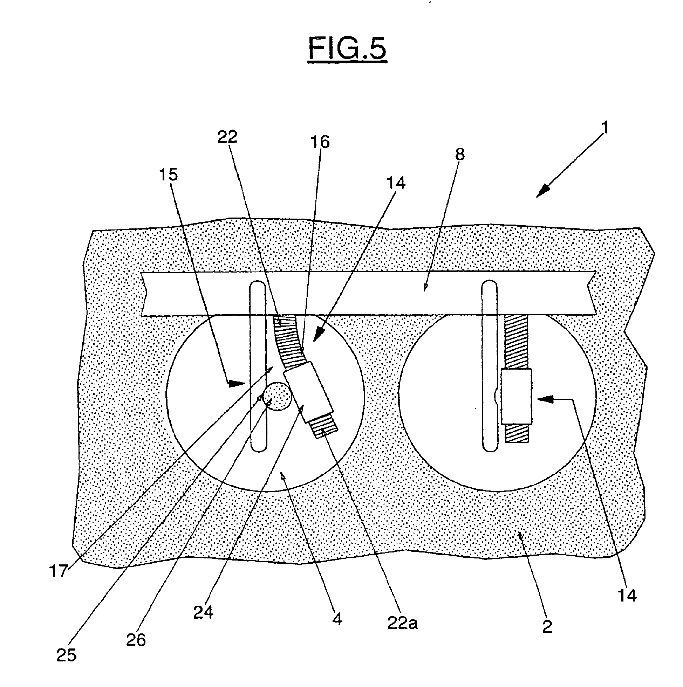

- et la figure 5 représente une vue partielle agrandie de dessus d'une partie du dispositif de repiquage précité.

Le dispositif de repiquage 1 représenté sur les figures comprend un bac 2 constitué par un bloc de forme parallélipipédique, par exemple en matière plastique expansée, dans lequel sont ménagées, à partir d'une face supérieure 3, une multiplicité d'alvéoles 4 de forme tronconique, placées selon des rangées longitudinales. Dans l'exemple, le bac 1 comprend cinq rangées d'alvéoles 4, la première, la troisième et la cinquième comprenant dix alvéoles et les deuxième et quatrième rangées comprenant neuf alvéoles placées en quinconce.

Le bac 2 est posé sur une table vibrante 5, actionnable par des moyens non représentés, dont la face supérieure porte des barres 6 entourant le bac 2 de façon à l'empêcher de glisser.

Le dispositf de repiquage 1 comprend en outre un support de maintien 7 qui comprend, dans l'exemple, cinq barres longitudinales 8 placées à distance les unes des autres et dont les extrémités sont fixées sur des traverses 9 et 10, ces traverses 9 et 10 étant en outre reliées par une barre longitudinale 11 placée d'un côté des barres longitudinales 8.

Le support de maintien 7 est dimensionné de façon à pouvoir être posé sur le bac 2 dans une position telle que ses barres longitudinales 8 prennent appui sur la face supérieure 3 du bac 2 et que ses barres transversales 9 et 10 et sa barre longitudinale 11 s'engagent aisément à l'extérieur des parois latérales correspondantes du bac 2.

Les barres transversales 9 et 10 portent des ressorts plats 12 et 13 qui s'étendent vers le bas et qui viennent en appui contre les faces latérales opposées du bac 2 de façon à maintenir le support 7 sur le bac 2.

Le support 7 comprend en outre une multiplicité de pinces 14 qui sont portées par les barres longitudinales 8.

Les pinces 14 comprennent des premières mâchoires 15 fixes et des secondes mâchoires 16 mobiles, délimitant entre elles un passage de prise 17 vertical s'étendant latéralement aux barres 8.

Les premières mâchoires 15 sont constituées par des fils pliés en forme d'épingles, dont les extrémités des branches 18 et 19 sont engagées et fixées dans les orifices correspondants 20 et 21 des barres 8, les mâchoires 15 s'étendant transversalement, à l'opposé de la barre longitudinale 11 et ses branches 18 et 19 étant placées l'une au-dessus de l'autre et à distance l'une de l'autre.

Les mâchoires 16 sont constituées par des ressorts hélicoïdaux 22 dont une extrémité est engagée et fixée dans des orifices 23 des barres longitudinales 8, ces ressorts 22 s'étendant transversalement, à l'opposé de la barre longitudinale 11 et étant disposés sensiblement à mi-hauteur entre les branches 18 et 19 des premières mâchoires 15 et latéralement.

Sur une partie avoisinant leurs extrémités libres 22a, les ressorts 22 portent des manchons de protection 24. Dans leurs zones situées en face de ces manchons 24, les branches 18 et 19 des premières mâchoires 15 présentent des encoches 25 de positionnement formées à la verticale les unes des autres.

Le support 7 est dimensionné de telle sorte que, lorsqu'il est installé sur le bac 2 comme décrit précédement, les zones de prises du passage de prise 17, formées entre les manchons de protection 24 et les encoches 25 des pinces 14, soient respectivement situées sensiblement en correspondance avec les axes verticaux des alvéoles 4 du bac 2 et qu'il existe un passage libre entre les extrémités libres de leurs mâchoires 15 et 16 et les parois intérieures des alvéoles 4.

Le dispositif de repiquage 1 qui vient d'être décrit peut être utilisé de la manière suivante.

Un opérateur installe un bac 2 sur la table vibrante 5 et installe le support 7 sur le bac 2 en écartant puis relâchant les ressorts latéraux 12 et 13, comme décrit précédement.

Ensuite, l'opérateur prend un jeune plant 26 à racines nues ou à motte réduite et engage ses racines dans une alvéole 4 du bac 2 en les faisant passer entre la pince 14 correspondante et la paroi de cette alvéole.

Puis, en agissant sur son extrémité libre 22a, l'opérateur courbe le ressort 22 constituant la seconde mâchoire 16 de cette pince, en l'écartant de sa mâchoire fixe 15 de façon à augmenter la largeur de son passage de prise 17.

Ceci étant fait, l'opérateur engage, entre les mâchoires 15 et 16 de cette pince 14, la tige ou le collet du plant 26, latéralement et à partir des extrémités des mâchoires 15 et 16.

Relâchant le ressort 22, le plant 26 introduit se trouve pris dans l'espace de prise 17, entre le manchon 24 et les encoches 25, et se trouve maintenu sensiblement verticalement grâce à l'effet latéral du ressort 22 et aux appuis en triangle déterminés d'une part par les branches 18 et 19 de la première mâchoire 15 et d'autre part par le manchon 24 de la seconde mâchoire 16.

L'opérateur reproduit ensuite les opérations qui viennent d'être décrites de façon à placer des jeunes plants respectivement dans les différentes alvéoles 4 du bac 2.

Les jeunes plants 26 se trouvent ainsi dressés sensiblement selon les axes verticaux des alvéoles 4

Ensuite, l'opérateur amène de la terre sur la face supérieure du bac 2 et la répartit de façon à remplir les alvéoles 4, en faisant fonctionner la table vibrante 5 par des moyens non représentés.

Lors de cette opération, les racines des plants 26 ont tendance à s'orienter vers le bas sous l'effet de la terre qui descend dans les alvéoles 4.

Lorsque l'opération de remplissage de terre ci-dessus est terminée, l'opérateur écarte, les unes après les autres, les mâchoires 15 des pinces 14 et extrait, en les pliant légèrement, les tiges ou les collets des différents plants 26 à l'extérieur des passages de prise 17. Ceci étant fait, l'opérateur écarte les ressorts latéraux 12 et 13 et sépare le support 7 du bac 2 en le soulevant. Enfin, l'opérateur enlève le bac 2.

L'opérateur peut alors recommencer les opérations qui viennent d'être décrites, de façon à procéder à un repiquage de plants dans un nouveau bac.

La présente invention ne se limite pas à l'exemple ci-dessus décrit. En particulier, les alvéoles du bac de repiquage pourraient être constituées par des godets individuels rangés dans une caisse. Le support de maintien portant les pinces pourrait être placé au-dessus d'un bac ménageant un grand espace de repiquage, sans alvéoles individuelles. Bien d'autres variantes de réalisation sont possibles sans sortir du cadre défini des revendications annexées.

## Revendications

1. Dispositif pour le repiquage de plants dans un bac de culture, **caractérisé par le fait qu'**il comprend un support (7) présentant au moins une barre (8) susceptible d'être disposée au-dessus et/ou à distance de la face supérieure dudit bac et une multiplicité de pinces (14) portées par ladite barre et comprenant chacune deux mâchoires (15, 16) dont au moins une peut être écartée de l'autre à l'encontre d'un ressort (16) et présente une partie de préhension, lesdites mâchoires délimitant entre elles un passage de prise (17) s'étendant latéralement à ladite barre, de telle sorte qu'après avoir écarté lesdites mâchoires, le collet ou la tige d'un plant puisse être introduit entre ces mâchoires dans ledit passage de prise, par déplacement latéral, et qu'après relachement desdites mâchoires, ledit plant soit maintenu sous l'effet dudit ressort dans une position telle que ses racines soient disposées dans ledit bac (2).

2. Dispositif selon la revendication 1, **caractérisé par le fait que** ladite pince comprend une première mâchoire (15) présentant deux branches (18, 19) et une seconde mâchoire (16) comprenant une branche (22) située en face de l'espace séparant les branches de la première mâchoire.

3. Dispositif selon l'une des revendications 1 et 2, **caractérisé par le fait qu'**au moins l'une desdites mâchoires de ladite pince (14) comprend au moins une branche (22) constituée au moins en partie par un ressort.

4. Dispositif selon l'une quelconque des revendications précédentes, **caractérisé par le fait qu'**au moins l'une desdites mâchoires comprend une encoche de positionnement (25) du plant.

5. Dispositif selon l'une quelconque des revendications précedentes, **caractérisé par le fait que** ledit bac (2) comprend une multiplicité d'alvéoles (4), ledites pinces (14) étant disposées respectivement de telle sorte que leurs passages de prise s'étendent sensiblement au milieu desdites alvéoles (4).

6. Dispositif selon l'une quelconque des revendications précedentes, **caractérisé par le fait que** ledit support (7) comprend une multiplicité de barres parallèles (8) portant des pinces (14) et un cadre (12, 13) portant lesdites barres parallèles.

7. Dispositif selon l'une quelconque des revendications précedentes, **caractérisé par le fait que** ledit support (7) est amovible et comprend des moyens de positionnement et/ou de maintien (9, 10, 11, 12, 13) adaptés pour coopérer avec ledit bac (2).

8. Dispositif selon l'une quelconque des revendications précedentes, **caractérisé par le fait que** ledit support (7) comprend des parties latérales de calage (9, 10, 11) s'étendant latéralement audit bac (2).

9. Dispositif selon l'une quelconque des revendications précedentes, **caractérisé par le fait que** ledit support (7) comprend au moins un ressort (12, 13) venant en appui contre une face latérale dudit bac (2).

10. Dispositif selon l'une quelconque des revendications précedentes, **caractérisé par le fait que** ledit bac (2) est installé sur une table vibrante (5).

## Claims

1. Device for pricking out seedlings in a pricking-out tray, **characterized in that** it comprises a support (7) having at least one bar (8) capable of being placed above and/or at a distance from the upper face of the said tray and a multiplicity of clamps (14) supported by the said bar and each comprising two jaws (15, 16) at least one of which can be separated from the other against a spring (16) and has a gripping portion, the said jaws delimiting between them a holding passage (17) extending laterally to the said bar, so that after having separated the said jaws, the neck or the stem of a seedling can be inserted between these jaws into the said holding passage, by sideways movement, and that after the said jaws are released, the said seedling is held under the effect of the said spring in a position such that its roots are placed in the said tray (2).

2. Device according to Claim 1, **characterized in that** the said clamp comprises a first jaw (15) having two branches (18, 19) and a second jaw (16) comprising one branch (22) situated opposite the space separating the branches of the first jaw.

3. Device according to one of Claims 1 and 2, **characterized in that** at least one of the said jaws of the said clamp (14) comprises at least one branch (22) consisting at least in part of a spring.

4. Device according to any one of the preceding claims, **characterized in that** at least one of the said jaws comprises a recess (25) for positioning the seedling.

5. Device according to any one of the preceding claims, **characterized in that** the said tray (2) comprises a multiplicity of cavities (4), the said clamps (14) being placed respectively so that their holding passages extend substantially in the middle of the said cavities (4).

6. Device according to any one of the preceding claims, **characterized in that** the said support (7) comprises a multiplicity of parallel bars (8) supporting clamps (14) and a frame (12, 13) supporting the said parallel bars.

7. Device according to any one of the preceding claims, **characterized in that** the said support (7) is removable and comprises positioning and/or retention means (9, 10, 11, 12, 13) adapted to interact with the said tray (2).

8. Device according to any one of the preceding claims, **characterized in that** the said support (7) comprises lateral immobilization parts (9, 10, 11) extending laterally to the said tray (2).

9. Device according to any one of the preceding claims, **characterized in that** the said support (7) comprises at least one spring (12, 13) pressing against a lateral face of the said tray (2).

10. Device according to any one of the preceding claims, **characterized in that** the said tray (2) is installed on a vibrating table (5).

## Patentansprüche

1. Vorrichtung zum Umpflanzen von Pflanzen in einen Kulturbehälter, **dadurch gekennzeichnet, dass** sie einen Träger (7) umfasst, der mindestens eine Stange (8), die über und/oder in einem Abstand von der Oberseite des Behälters angeordnet werden kann, und eine Vielzahl von Klemmen (14) aufweist, die von der Stange getragen werden und jeweils zwei Klemmbacken (15, 16) aufweisen, von denen mindestens eine gegen die Wirkung einer Feder (16) von der anderen entfernt werden kann und einen Greifteil aufweist, wobei die Klemmbacken zwischen sich einen Greifdurchgang (17) begrenzen, der sich quer zur Stange erstreckt, so dass nach Spreizen der Spannbacken der Hals oder der Stiel einer Pflanze durch laterales Verschieben zwischen diesen Klemmbacken in den Greifdurchgang eingeführt werden kann, und nach Freigeben der Spannbacken die Pflanze unter der Wirkung der Feder in einer solchen Position gehalten wird, dass ihre Wurzeln in dem Behälter (2) angeordnet sind.

2. Vorrichtung nach Anspruch 1, **dadurch gekennzeichnet, dass** die Klemme eine erste Spannbacke (15), die zwei Schenkel (18, 19) aufweist, und eine zweite Spannbacke (16), die einen Schenkel (22) aufweist, der gegenüber dem die Schenkel der ersten Spannbacke trennenden Raum angeordnet ist, umfasst.

3. Vorrichtung nach Anspruch 1 oder 2, **dadurch gekennzeichnet, dass** mindestens eine der Spannbacken der Klemme (14) mindestens einen Schenkel (22) aufweist, der zumindest teilweise aus einer Feder besteht.

4. Vorrichtung nach einem der vorhergehenden Ansprüche, **dadurch gekennzeichnet, dass** mindestens eine der Spannbacken eine Kerbe (25) zur Positionierung der Pflanze aufweist.

5. Vorrichtung nach einem der vorhergehenden Ansprüche, **dadurch gekennzeichnet, dass** der Behälter (2) eine Vielzahl von Öffnungen (4) aufweist, wobei die Klemmen (14) jeweils so angeordnet sind, dass sich ihre Greifdurchgänge im Wesentlichen in der Mitte der Öffnungen (4) erstrecken.

6. Vorrichtung nach einem der vorhergehenden Ansprüche, **dadurch gekennzeichnet, dass** der Träger (7) eine Vielzahl von parallelen Stangen (8), die die Klemmen (14) tragen, und einen die parallelen Stangen tragenden Rahmen (12, 13) aufweist.

7. Vorrichtung nach einem der vorhergehenden Ansprüche, **dadurch gekennzeichnet, dass** der Träger (7) abnehmbar ist und zum Zusammenwirken mit dem Behälter (2) ausgeführte Positionier- und/oder Haltemittel (9, 10, 11, 12, 13) aufweist.

8. Vorrichtung nach einem der vorhergehenden Ansprüche, **dadurch gekennzeichnet, dass** der Träger (7) sich seitlich des Behälters (2) erstreckende Festklemmseitenteile (9, 10, 11) aufweist.

9. Vorrichtung nach einem der vorhergehenden Ansprüche, **dadurch gekennzeichnet, dass** der Träger (7) mindestens eine Feder (12, 13) aufweist, die an einer Seitenfläche des Behälters (2) anliegt.

10. Vorrichtung nach einem der vorhergehenden Ansprüche, **dadurch gekennzeichnet, dass** der Behälter (2) an einem Rütteltisch (5) installiert ist.
